# EUROPÄISCHE PATENTANMELDUNG

(11) **EP 1 724 944 A2**
(43) Veröffentlichungstag der Anmeldung: **22.11.2006**
(21) Anmeldenummer: 06114067.9
(22) Anmeldetag: 17.05.2006
(51) Int. Cl.: H04B 7/08

(54) **Verfahren zum Ausblenden von Störsignalen in einer Funkempfangseinrichtung mit Antennen-Diversity und Funkempfangseinrichtung**

(30) Priorität: 18.05.2005 DE 102005022872
(71) Anmelder: SIEMENS AKTIENGESELLSCHAFT, 80333 München (DE)
(72) Erfinder: Banziger, Christiaan Marie Hubertus, 6041 PD Roermond (NL); Bollars, Stefan, 5708 WB Helmond (NL); Schlösser, Theodoor Antoon Jozef, 5655 JW Eindhoven (NL)

(57) **Zusammenfassung**

Die Erfindung betrifft ein Verfahren zum Ausblenden von Störsignalen in einer Funkempfangseinrichtung, insbesondere einer Rundfunkempfangseinrichtung mit Antennen-Diversity. Hierbei wird ein für eine erste Antenne empfangenes Funksignal einer Signalverarbeitungseinrichtung zugeführt, und es werden Störungen des Funksignals detektiert. Im Falle einer detektierten Störung erfolgt ein Umschalten von der ersten Antenne auf eine zweite Antenne, und ein Wiedergabesignal der Signalverarbeitungseinrichtung wird kurzzeitig zum Unterdrücken der Störung ausgeblendet. Erfindungsgemäß werden beim Ausblenden Signalverarbeitungszeiten berücksichtigt, und das Ausblenden des Wiedergabesignals beginnt um ein vorgegebenes zeitintervall zeitlich versetzt zum Umschalten von der ersten Antenne auf die zweite Antenne. Hierdurch kann die Ausblendzeit verringert werden.

## Beschreibung

Die Erfindung betrifft ein Verfahren zum Ausblenden von Störsignalen in einer Funkempfangseinrichtung mit mindestens zwei Antennen, insbesondere einer Rundfunkempfangseinrichtung, mit Antennen-Diversity, wobei ein von einer ersten Antenne empfangenes Funksignal einer Signalsverarbeitungseinrichtung zugeführt wird, Störungen des Funksignals detektiert werden und im Falle einer detektierten Störung ein Umschalten von der ersten Antenne auf eine zweite Antenne erfolgt, sowie ein Wiedergabesignal der Signalverarbeitungseinrichtung kurzzeitig zum Unterdrücken der Störung ausgeblendet wird. Weiterhin betrifft die Erfindung eine Funkempfangseinrichtung, insbesondere eine Rundfunkempfangseinrichtung mit mindestens zwei Antennen, einem Antennenwahlschalter zur Auswahl einer der Antennen als aktuelle Empfangsantenne, einer Signalverarbeitungseinrichtung, der von der aktuellen Empfangsantenne empfangene Funksignale zugeführt werden und die zur Erzeugung eines Wiedergabesignals ausgebildet ist, einem Detektionsmodul zur Detektion von Störungen, insbesondere Mehrwegeempfang, des über die aktuelle Empfangsantenne empfangenen Funksignals und zur Generierung eines Steuersignals für den Antennenwahlschalter bei detektierter Störung, wodurch der Antennenwahlschalter auf eine andere Antenne als aktuelle Antenne umschaltet und einem von dem Detektionsmodul angesteuerten ersten Ausblendmodul zum kurzzeitigen Ausblenden des Wiedergabesignals.

Beim Empfang von Funksignalen, beispielsweise Rundfunksignalen oder Mobilfunksignalen, in einem sich bewegenden Kraftfahrzeug treten fortlaufend Änderungen der Empfangsverhältnisse auf. Insbesondere kann der Funkempfang durch den so genannten Mehrwegeempfang gestört sein. Mehrwegeempfang wird durch Signalreflektionen erzeugt, die beispielsweise an hohen Gebäuden, Bergen oder Bäumen erfolgen können. Das an einem bestimmten Ort empfangene Funksignal besteht daher aus einer Überlagerung unterschiedlicher Teilsignale, die hinsichtlich Amplitude und Phasenlage variieren. Die Überlagerung dieser unterschiedlichen Teilsignale in einer Antenne kann daher zu einer Schwächung oder auch einer kompletten Auslöschung des gewünschten Funksignals durch Interferenz führen. Es ist bekannt, dass die Empfangsverhältnisse innerhalb kürzester Distanzen stark variieren können. In Kraftfahrzeugen werden daher insbesondere für den Rundfunkempfang häufig mehrere Antennen angebracht, und es wird dafür gesorgt, dass das stärkste Antennensignal dem Rundfunkempfänger zugeführt wird. Ein derartiges Verfahren ist als Antennen-Diversity-Verfahren bekannt. Hierbei werden die Antennensignale einem Antennenwahlschalter zugeführt, der von einem Detektionsmodul zur Detektion von Störungen des über die aktuelle Empfangsantenne empfangenen Funksignals angesteuert wird. Derartige Detektionsmodule sind bekannt und können als integrierte Schaltkreise, beispielsweise Philips IC TEA 6101 bezogen werden. Ein digitaler Signalprozessor DSP beurteilt hierbei das digitalisierte Zwischenfrequenzsignal des Rundfunkempfängers und steuert den Antennenwahlschalter entsprechend an.

Es ist bekannt, dass durch das Umschalten selbst eine weitere Störung erzeugt wird. Ursache dieser Störung ist die im Allgemeinen unterschiedliche Phasenlage der Signale zweier verschiedener Antennen. Somit tritt im Hochfrequenzzweig ein Amplituden- und Phasensprung auf. Die durch das Umschalten erzeugte Störung wirkt sich ohne Störunterdrückungsmaßnahmen bis auf das Wiedergabesignal aus und ist bei einem Rundfunkempfänger dann hörbar. Es ist bekannt, das im Detektionsmodul generierte Steuersignal für den Antennenwahlschalter einem Ausblendmodul zum kurzzeitigen Ausblenden des Wiedergabesignals zuzuführen. Somit ist zwar das eigentliche Störsignal nicht mehr hörbar, jedoch setzt die Wiedergabe kurzfristig aus.

Aufgabe der Erfindung ist es daher, die Zeitdauer der Signalausblendung auf Grund des Umschaltens der Antenne zu verringern.

Die Aufgabe wird bei einem gattungsgemäßen Verfahren bzw. einer gattungsgemäßen Funkempfangseinrichtung dadurch gelöst, dass das Ausblenden des Wiedergabesignals um ein vorgegebenes Zeitintervall zeitlich versetzt zu dem Umschaltsignal beginnt.

Es wurde erkannt, dass durch die Berücksichtigung der Signalverarbeitungszeit in der Signalverarbeitungseinrichtung das Ausblenden des Wiedergabesignals nicht bereits mit dem Antennenumschaltsignal beginnen muss. Wird nämlich bereits mit dem Antennenumschaltsignal das Wiedergabesignal ausgeblendet, so erfolgt das Ausblenden bereits zu einem Zeitpunkt, an dem das Wiedergabesignal durch das Umschalten der Antennen noch nicht beeinträchtigt ist. Insbesondere bei digitaler Signalverarbeitung in der Signalverarbeitungseinrichtung treten nämlich Signalverzögerungen auf, die am Ausgang eines Tuners der Signalverarbeitungseinrichtung beispielsweise bereits 80 µs und im Niederfrequenzsignal beispielsweise 200 µs betragen können. Beginnt nun das Ausblenden des Wiedergabesignals um ein entsprechendes Zeitintervall zeitlich verschoben, verglichen mit dem Zeitpunkt des Antennenwechsels, so wird das Störsignal sicher ausgeblendet. Die Zeitdauer der Ausblendung kann jedoch durch den verzögerten Beginn der Ausblendung auf die wahre Dauer der Störung durch das Umschalten der Antennen begrenzt werden. Insbesondere ist daher vorgesehen, dass das Ausblenden des Wiedergabesignals für eine Zeitdauer erfolgt, die einer Zeitdauer der durch das Umschalten von der ersten auf die zweite Antenne bedingten Signalstörung entspricht, und das auf Grund des Umschaltens gestörte Signal ausgeblendet wird.

Das Ausblenden des Wiedergabesignals kann für eine Zeitdauer von nicht mehr als 50 µs, vorzugsweise nicht mehr als 25 µs erfolgen. Es hat sich gezeigt, dass derartige Zeitdauern völlig ausreichend sind, um die durch das Umschalten entstehenden Störungen auszublenden. Es wurde festgestellt, dass das durch das Umschalten der Antennen erzeugte Störsignal eine Dauer von nur ca. 20 µs aufweist. Abhängig vom speziellen Aufbau können sich hier jedoch Unterschiede ergeben. Die Ausblenddauer von nicht mehr als 50 µs, vorzugsweise nicht mehr als 25 µs, ist bereits deutlich kleiner als die übliche Signalverzögerung in einem digitalen Signalprozessor, die beim Beginnen des Ausblendens mit dem Antennenumschaltsignal Bestandteil der Ausblendzeit ist. Es ist daher vorgesehen, dass das vorgegebene Zeitintervall, um das das Ausblenden des Wiedergabesignals zeitversetzt zu dem Umschaltsignal beginnt, einer Signalsverarbeitungszeit der Signalverarbeitungseinrichtung entspricht.

Mit dem bisher beschriebenen Verfahren bzw. der bisher beschriebenen Funkempfangseinrichtung werden insbesondere ausschließlich die durch das Umschalten der Antennen bedingten Störungen eliminiert. In einer Weiterbildung der Erfindung sollen jedoch auch die Empfangsstörungen, die Auslöser für das Umschalten der Antennen sind, im Wiedergabesignal eliminiert werden. Hierzu wird vorgeschlagen, ein zweites, zeitversetztes Ausblenden des Wiedergabesignals durchzuführen. Mit dem zweiten, zeitversetzten Ausblenden des Wiedergabesignals werden nun die Empfangsstörungen, insbesondere durch einen Mehrwegeempfang, eliminiert. Auf Grund der Signalsverarbeitungszeiten in der Signalverarbeitungseinrichtung ist es möglich, nach Detektion des Mehrwegeempfangs das gestörte Signal noch vollständig zu eliminieren. Wird ein gestörtes Funksignal empfangen, so wird nach entsprechender Detektion das Antennenumschaltsignal generiert. Zu diesem Zeitpunkt wurde auf Grund der Signalverarbeitungszeit in der Signalverarbeitungseinrichtung das gestörte Signal jedoch noch nicht ausgegeben, sondern befindet sich noch in der Signalverarbeitungseinrichtung und kann daher durch ein entsprechend an die Signalverarbeitungszeit angepasstes, zeitversetztes Ausblenden des Wiedergabesignals noch eliminiert werden. Insbesondere kann hierbei das Ausblenden durch das zweite Ausblendmodul für eine Zeitdauer erfolgen, die einer Zeitdauer vom Beginn der detektierten Empfangsstörung bis zum Umschalten der Antennen entspricht. Bei dieser Ausgestaltung wird somit das zweite Ausblenden auf die Zeitdauer der Empfangsstörung begrenzt und somit so kurz wie möglich gehalten.

In einer erfindungsgemäßen Rundfunkempfangseinrichtung kann insbesondere ein entsprechend ausgebildetes Autoradio eingesetzt werden, dass dann insbesondere die Signalverarbeitungseinrichtung und die Ausblendschaltung enthält.

Die Erfindung wird nachfolgend anhand von Ausführungsbeispielen und der Zeichnung näher erläutert. Es zeigen:
- Figur 1: einen prinzipiellen Aufbau einer Rundfunkempfangseinrichtung,
- Figur 2: zeigt eine erste Ausblendschaltung und die dazugehörigen zeitlichen Signalverläufe,
- Figur 3: eine zweite Ausblendschaltung und die dazugehörigen Signalverläufe.

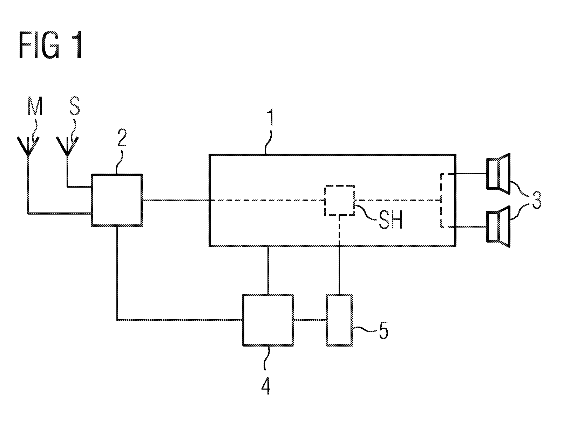

Figur 1 zeigt den prinzipiellen Aufbau einer erfindungsgemäßen Rundfunkempfangseinrichtung beispielhaft mit zwei Antennen. Eine Signalverarbeitungseinrichtung 1 ist über einen Antennenwahlschalter 2 mit einer der Antennen M (Main) oder S (Sub) verbunden. Die Signalverarbeitungseinrichtung 1 ist im Wesentlichen ein an sich bekannter Rundfunkempfänger, insbesondere ein Autoradio. Die Signalverarbeitungseinrichtung 1 enthält in bekannter Weise insbesondere einen Tuner zur Abstimmung auf eine bestimmte Empfangsfrequenz und einen dem Tuner nachgeschalteten A/D-Wandler zur Umwandlung der analogen Ausgangssignale des Tuners in digitale Signale. Die weitere Signalverarbeitung kann dann insbesondere digital in einem digitalen Signalprozessor (DSP) erfolgen. Am Ende der Verarbeitungskette der Signalverarbeitungseinrichtung 1 steht dann schließlich ein niederfrequentes Wiedergabesignal, das über die Lautsprecher 3 ausgegeben wird. Die Rundfunkempfangseinrichtung weist weiterhin ein Detektionsmodul 4 auf, mit dem ein Mehrwegeempfang detektiert wird. Bei dem Detektionsmodul 4 kann es sich insbesondere um einen integrierten Schaltkreis mit einem digitalen Signalprozessor handeln, der ein digitalisiertes Zwischenfrequenzsignal der Signalverarbeitungseinrichtung beurteilt und bei detektierter Signalstörung ein Steuersignal an den Antennenwahlschalter 2 ausgibt, wodurch beispielsweise von der Antenne M auf die Antenne S umgeschaltet wird. Das Detektionsmodul 4 kann insbesondere zusammen mit der Signalverarbeitungseinrichtung 1 Bestandteil eines Autoradios sein.

Das Steuersignal des Detektionsmoduls 4 wird erfindungsgemäß einem Timer 5 zugeführt, der seinerseits zeitversetzt zu dem Steuersignal des Detektionsmoduls 4 ein Ausblenden des Wiedergabesignals der Signalverarbeitungseinrichtung 1 bewirkt, indem eine Sample- and Hold-Schaltung SH entsprechend angesteuert wird. Der Timer 5 und die Sample- and Hold-Schaltung SH bilden somit im Wesentlichen ein Ausblendmodul.

Zur Ausblendung des Wiedergabesignals kann beispielsweise das niederfrequente Wiedergabesignal selbst unterbrochen werden. Dies kann beispielsweise dadurch erfolgen, dass eine Verbindung der Lautsprecher 3 zur Masse erfolgt. Andererseits kann jedoch auch einfach der letzte Signalpegel vor dem Ausblenden beibehalten werden. In einer anderen Variante, die bevorzugt wird, kann auch ein in der Signalverarbeitungseinrichtung 1 erzeugtes Multiplexsignal (MPX) entsprechend ausgeblendet werden.

Die durch den Timer 5 eingestellte Verzögerungszeit für die Sample- and Hold-Schaltung SH wird an die Signalverarbeitungszeit in der Signalverarbeitungseinrichtung 1 angepasst.

Hierdurch kann erreicht werden, dass der Ausblendvorgang genau dann beginnt, wenn das durch das Umschalten der Antennen gestörte Signal gerade an dem von der Sample- and Hold-Schaltung SH beeinflussbaren Ort innerhalb der Signalverarbeitungseinrichtung 1 ankommt. Hierdurch kann die Ausblendzeit insbesondere auf die Dauer der Signalstörung begrenzt und damit kurz gehalten werden.

Bei einer Ausblendschaltung nach dem Stand der Technik, in der ein Timer 5 nicht vorhanden ist, würde die Sample- and Hold-Schaltung SH bereits mit Empfang des Steuersignals von dem Detektionsmodul 4 das Wiedergabesignal ausblenden. Auf Grund der Signalverarbeitungszeiten in der Signalverarbeitungseinrichtung 1 ist zu diesem Zeitpunkt am Ort der Sampleand Hold-Schaltung SH das gestörte Signal jedoch noch nicht angekommen. Die Ausblendzeit muss daher entsprechend lang gewählt werden, um ein sicheres Ausblenden der Störung zu gewährleisten. Durch die erfindungsgemäße Berücksichtigung der Signallaufzeiten kann die Ausblendzeit - wie nachfolgend gezeigt wird - deutlich verringert werden.

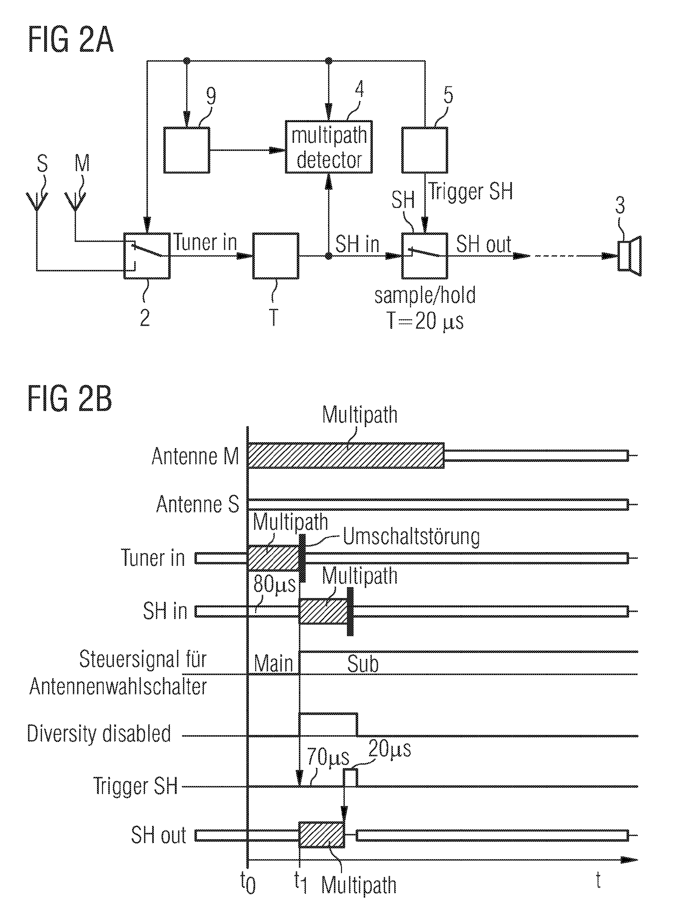

Figur 2 zeigt ein Schaltungsbeispiel für eine Ausblendschaltung sowie die dazugehörigen Signalverläufe. Zum Zeitpunkt t₀ hat der Antennenwahlschalter 2 einen Tuner T der Signalverarbeitungseinrichtung mit der Hauptantenne M verbunden. Die Antennensignale der Antennen M und S sind in Figur 2b in den oberen beiden Signalverläufen schematisch dargestellt. Zum Zeitpunkt t₀ wird der Empfang über die Antenne M durch Mehrwegeempfang (Multipath) gestört. Dies ist in Figur 2b durch einen dickeren Balken kenntlich gemacht. Der Empfang über die Antenne S ist hingegen ungestört. Da die Antenne M mit dem Tuner T verbunden ist, tritt somit auch am Eingang des Tuners T das gestörte Signal auf. Die Störung wird durch das Detektionsmodul 4 detektiert, das ein entsprechendes Steuersignal an den Antennenwahlschalter 2 zum Umschalten auf die Antenne S ausgibt. Durch das Umschalten von der Antenne M auf die Antenne S tritt am Eingang des Tuners T ein Amplituden- und Phasensprung im zugeführten Antennensignal auf, wodurch eine Umschaltstörung erzeugt wird. Der entsprechende Signalverlauf am Eingang des Tuners T ("Tuner in") ist in Figur 2b ebenfalls dargestellt. An einer dem Tuner T nachgeschalteten Sample- and Hold-Schaltung SH tritt sowohl das gestörte Mehrwegesignal als auch die Umschaltstörung zeitverzögert gegenüber dem Tunereingang auf. Das entsprechende Signal ist in Figur 2b als "SH in" dargestellt. Die Verzögerungszeit durch die Signalverarbeitung in einem digitalen Signalprozessor des Tuners T beträgt hier beispielsweise 80 µs.

Das Steuersignal für den Antennenwahlschalter, das zum Zeitpunkt t₁ ausgegeben wird, wird auch dem Timer 5 zugeführt. Der Timer 5 steuert mit einer Verzögerungszeit von 70 µs die Sample- and Hold-Schaltung SH zum Ausblenden des Wiedergabesignals an. Der entsprechende Signalverlauf ist in Figur 2b unter "Trigger SH" dargestellt. Das Ausblenden des Wiedergabesignals beginnt somit 70 µs nach dem Umschalten der Antennen. Die Ausblenddauer durch die Sample- and Hold-Schaltung SH beträgt 20 µs. Wie aus einem Vergleich der zeitlichen Signalverläufe "SH in" und "Trigger SH" zu ersehen ist, erfolgt das Ausblenden des Signals durch die Sample- and Hold-Schaltung SH angepasst zu dem Zeitpunkt, an dem das durch das Umschalten der Antennen gestörte Signal am Eingang der Sampleand Hold-Schaltung SH anliegt. Das Ausgangssignal der Sampleand Hold-Schaltung SH (Signal "SH out") in Figur 2b zeigt, dass durch das Ausblenden genau die Umschaltstörung aus dem Signal entfernt wurde. Hierbei ist die Zeitdauer des Ausblendvorgangs insbesondere weitgehend an die Dauer der Umschaltstörung angepasst.

In der Ausgestaltung gemäß Figur 2a wird das Steuersignal des Detektionsmoduls 4 noch einem Totzeitmodul 9 zugeführt, das das Detektionsmodul 4 für eine Zeitspanne von 80 µs außer Kraft setzt, um ein erneutes Umschalten der Antennen auf Grund der Detektion des durch das Umschalten der Antennen gestörten Signals zu verhindern.

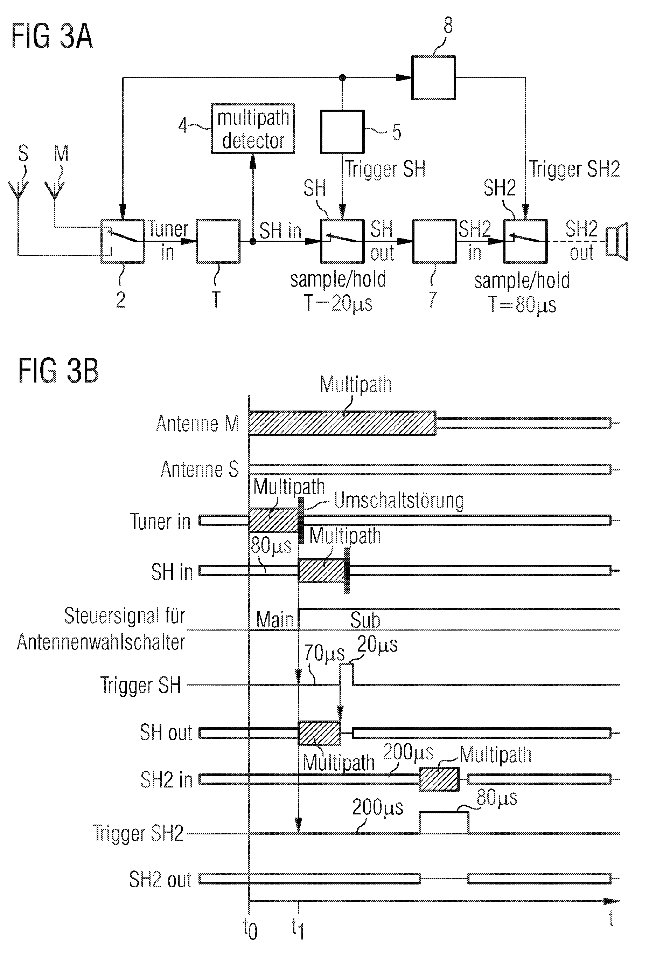

Wie aus dem Signalverlauf "SH out" der Figur 2b ersichtlich ist, wird mit dem beschriebenen Verfahren das durch das Umschalten der Antennen erzeugte Störsignal ausgeblendet, nicht jedoch das vorangehende durch den Mehrwegeempfang gestörte Signal (Multipath-Signal). Das Multipath-Signal kann mit der nachfolgend anhand der Figur 3 beschriebenen Abwandlung zusätzlich ausgeblendet werden.

Figur 3a zeigt einen gegenüber 2a erweiterten Schaltungsaufbau, bei dem hinter einem der Sample- and Hold-Schaltung SH nachgeschalteten Signalverarbeitungsmodul 7 eine weitere Sample- and Hold-Schaltung SH2 vorhanden ist. Das Signalverarbeitungsmodul 7 weist eine Signalverarbeitungszeit von beispielsweise 200 µs auf. Ein von dem Detektionsmodul mit dem Steuersignal angesteuerter weiterer Timer 8 steuert nun die zweite Sample- and Hold-Schaltung SH2 ebenfalls mit einer Verzögerung an, die der Verarbeitungszeit durch das Signalverarbeitungsmodul 7 entspricht. Die spezielle Verarbeitungszeit ist von der Architektur des verwendeten digitalen Signalprozessors abhängig und kann daher bei anderen Aufbauten größer oder kleiner sein.

In Figur 3b sind die entsprechenden Signalverläufe dargestellt, wobei gegenüber Figur 2b die unteren drei Signalverläufe "SH2 in" am Eingang der Sample- and Hold-Schaltung SH2, "Trigger SH2" am Ausgang des weiteren Timers 8 und "SH2 out" am Ausgang der zweiten Sample- and Hold-Schaltung SH2 zusätzlich gezeigt sind. Am Ausgang der Sample- and Hold-Schaltung SH ist, wie bereits im Zusammenhang mit Figur 2 erläutert, das Multipath-Signal noch vorhanden. Dieses Multipath-Signal tritt um die Signalverarbeitungszeit des Signalverarbeitungsmoduls 7 verzögert am Eingang der zweiten Sample- and Hold-Schaltung SH2 auf, hier mit einer Verzögerung von beispielsweise 200 µs. Die zweite Sample- and Hold-Schaltung SH2 wird von dem weiteren Timer 8 ebenfalls mit einer entsprechenden Verzögerung von 200 µs gegenüber dem Steuersignal des Detektionsmoduls 4 angesteuert und bewirkt ein Ausblenden des Signals für beispielsweise 80 µs. Das Ausgangssignal "SH2 out" der Sample- and Hold-Schaltung SH2 weist somit das Multipath-Signal nicht mehr auf. Die Ausblendzeit durch die Sample- and Hold-Schaltung SH2 kann fest eingestellt sein und beträgt hier 80 µs. Der Wert ist so gewählt, dass üblicherweise auftretende Zeitintervalle vom ersten Auftreten der Multipath-Störung bis zum Antennenumschalten abgedeckt und somit sicher ausgeblendet werden.

In einer Abwandlung kann die Ausblendzeit der Sample- and Hold-Schaltung SH2 an die effektive Dauer der Multipath-Störung angepasst und somit die Ausblendzeit weiter reduziert werden. Hierzu wird die Länge der Multipath-Störung bestimmt und dieser Wert der Sample- and Hold-Schaltung SH2 zugeführt, wodurch die Ausblendzeit an die Dauer der aktuell auftretenden Störung angepasst werden kann.

In einer weiteren Abwandlung des Verfahrens kann anstelle eines vollständigen Ausblendens des Wiedergabesignals auch nur ein teilweises Ausblenden durch Reduzierung des Pegels vorgenommen werden.

## Patentansprüche

1. Verfahren zum Ausblenden von Störsignalen in einer Funkempfangseinrichtung mit mindestens zwei Antennen, insbesondere einer Rundfunkempfangseinrichtung mit Antennen-Diversity, wobei
- ein von einer ersten Antenne (M) empfangenes Funksignal einer Signalverarbeitungseinrichtung (1) zugeführt wird,
- Störungen des Funksignals detektiert werden,
- im Falle einer detektierten Störung
- ein Umschalten von der ersten Antenne (M) auf eine zweite Antenne (S) erfolgt,
- ein Wiedergabesignal der Signalverarbeitungseinrichtung (1) kurzzeitig zum Unterdrücken der Störung ausgeblendet wird,
**dadurch gekennzeichnet , dass** das Ausblenden des Wiedergabesignals um ein vorgegebenes Zeitintervall zeitlich versetzt zum Umschalten von der ersten Antenne auf die zweite Antenne beginnt.

2. Verfahren nach Anspruch 1, **dadurch gekennzeichnet, dass** das Ausblenden des Wiedergabesignals für eine Zeitdauer erfolgt, die einer Zeitdauer einer durch das Umschalten von der ersten auf die zweite Antenne bedingten Signalstörung entspricht, und das aufgrund des Umschaltens gestörte Signal ausgeblendet wird.

3. Verfahren nach Anspruch 1 oder 2, **dadurch gekennzeichnet, dass** das Ausblenden des Wiedergabesignals für eine Zeitdauer von nicht mehr als 50 µs, vorzugsweise nicht mehr als 25 µs erfolgt.

4. Verfahren nach einem der vorhergehenden Ansprüche, **dadurch gekennzeichnet , dass** das vorgegebene Zeitintervall, um das das Ausblenden des Wiedergabesignals zeitversetzt zu dem Umschaltsignal beginnt, einer Signalverarbeitungszeit der Signalverarbeitungseinrichtung entspricht.

5. Verfahren nach einem der vorhergehenden Ansprüche, **dadurch gekennzeichnet , dass** zusätzlich ein zweites, zeitversetztes Ausblenden des Wiedergabesignals erfolgt.

6. Verfahren nach Anspruch 5, **dadurch gekennzeichnet, dass** das zweite Ausblenden des Wiedergabesignals für eine Zeitdauer erfolgt, die einer Zeitdauer vom Beginn der detektierten Empfangsstörung bis zum Umschalten der Antennen entspricht.

7. Funkempfangseinrichtung, insbesondere Rundfunkempfangseinrichtung mit
- mindestens zwei Antennen (M, S),
- einem Antennenwahlschalter (2) zur Auswahl einer der Antennen (M, S) als aktuelle Empfangsantenne,
- einer Signalverarbeitungseinrichtung (1), der von der aktuellen Empfangsantenne empfangene Funksignale zugeführt werden und die zur Erzeugung eines Wiedergabesignals ausgebildet ist,
- einem Detektionsmodul (4) zur Detektion von Störungen, insbesondere Mehrwegeempfang, des über die aktuelle Empfangsantenne empfangenen Funksignals und zur Generierung eines Steuersignals für den Antennenwahlschalter (2) bei detektierter Störung, wodurch der Antennenwahlschalter (2) auf eine andere Antenne als aktuelle Antenne umschaltet,
- einem von dem Detektionsmodul (4) angesteuerten ersten Ausblendmodul zum kurzzeitigen Ausblenden des Wiedergabesignals,
**dadurch gekennzeichnet , dass** das Ausblenden des Wiedergabesignals um ein vorgegebenes Zeitintervall zeitlich versetzt zu dem Umschaltsignal beginnt.

8. Funkempfangseinrichtung nach Anspruch 1, **dadurch gekennzeichnet , dass** das Ausblenden des Wiedergabesignals für eine Zeitdauer erfolgt, die einer Zeitdauer eines durch das Umschalten der Antennen bedingten Signalstörung entspricht, und das aufgrund des Umschaltens gestörte Signal ausgeblendet wird.

9. Funkempfangseinrichtung nach Anspruch 1 oder 2, **dadurch gekennzeichnet , dass** das Ausblenden des Wiedergabesignals für eine Zeitdauer von nicht mehr als 50 µs, vorzugsweise nicht mehr als 25 µs erfolgt.

10. Funkempfangseinrichtung nach einem der vorhergehenden Ansprüche, **dadurch gekennzeichnet , dass** das vorgegebene Zeitintervall, um das das Ausblenden des Wiedergabesignals zeitversetzt zu dem Umschaltsignal beginnt, einer Signalverarbeitungszeit der Signalverarbeitungseinrichtung entspricht.

11. Funkempfangseinrichtung nach einem der vorhergehenden Ansprüche, **dadurch gekennzeichnet , dass** die Funkempfangseinrichtung ein zweites Ausblendmodul enthält, das ein zweites Ausblenden des Wiedergabesignals zeitversetzt zu dem Ausblenden des Wiedergabesignals durch das erste Ausblendmodul bewirkt.

12. Funkempfangseinrichtung nach Anspruch 5, **dadurch gekennzeichnet , dass** das Ausblenden durch das zweite Ausblendmodul für eine Zeitdauer erfolgt, die einer Zeitdauer vom Beginn der detektierten Empfangsstörung bis zum Umschalten der Antennen entspricht.

13. Funkempfangseinrichtung nach einem der vorhergehenden Ansprüche, **dadurch gekennzeichnet , dass** das erste und/oder zweite Ausblendmodul als Sample/Hold-Schaltung (SH) ausgebildet ist.

14. Rundfunkempfangseinrichtung nach einem der vorhergehenden Ansprüche, **dadurch gekennzeichnet , dass** das erste und/oder zweite Ausblendmodul Bestandteil eines digitalen Signalverarbeitungsmoduls ist.

15. Zur Verwendung in einer Funkempfangseinrichtung nach einem der vorhergehenden Ansprüche ausgebildetes Autoradio.
